# EUROPEAN PATENT APPLICATION

(11) **EP 3 965 194 A1**
(43) Date of publication of application: **09.03.2022**
(21) Application number: 20886472.8
(22) Date of filing: 13.11.2020
(51) Int. Cl.: H01M 4/48, H01M 4/485, H01M 10/0525

(54) **NEGATIVE ELECTRODE MATERIAL AND PREPARATION METHOD THEREFOR, AND LITHIUM ION BATTERY**

(30) Priority: 14.11.2019 CN 201911112677
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: DENG, Zhiqiang, Shenzhen, Guangdong 518106 (CN); QU, Lijuan, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: Croce, Valeria
(86) International application number: PCT/CN2020/128783
(87) International publication number: WO 2021/093865

(57) **Abstract**

A negative electrode material and a preparation method therefor, and a lithium ion battery. The negative electrode material comprises nanometer silicon, a silicon oxide, and crystalline Li₂Si₂O₅, wherein the average particle size is Li₂Si₂O₅ is lower than 20 nm. The preparation method comprises: performing heat treatment on a silicon oxide material under a protective atmosphere or vacuum to obtain a silicon oxide material subjected to heat treatment (S100); and after mixing the silicon oxide material subjected to heat treatment with a lithium source under the protective atmosphere or vacuum, performing sintering to obtain a negative electrode material, the negative electrode material comprising the nanometer silicon, the silicon oxide, and the crystalline Li₂Si₂O₅ (S200). For the negative electrode material, by carrying out lithium doping on the silicon oxide material, the initial coulomb efficiency of the material is greatly improved, and by controlling a generated the crystalline size of generated lithium silicate, finally, the cycle performance of the material is improved as the high initial coulomb efficiency is obtained. By preparing the lithium silicate in smaller crystalline size, it is better ensured that lithium ions can smoothly complete a lithium insertion/deinsertion reaction, and a good rate performance is yielded.

## Description

The present disclosure claims the priority to the Chinese patent application with the filing No. 2019111126773 filed with the Chinese Patent Office on November 14, 2019, and entitled "Negative Electrode Material and Preparation Method therefor, and Lithium Ion Battery", all the contents of both of which are incorporated herein by reference in entirety.

### Technical Field

The present disclosure relates to the technical field of energy storage materials, and relates to a negative electrode material, a preparation method therefor, and a lithium ion battery.

### Background Art

As a new lithium ion secondary battery negative electrode material, the silicon oxygen material becomes a hot spot of research today due to high capacity. However, compared with the conventional graphite negative electrode material, the first Coulombic efficiency of the silicon oxygen material is relatively low, and the cycle performance and the magnification performance are worse, thus limiting the commercial application thereof.

When the silicon oxygen material SiOₓ is charged for the first time, oxygen atoms in the SiOₓ will also irreversibly react with Li+ in electrolyte to generate Li₂O and Li₄SiO₄ of inert phase, thereby increasing the first irreversible capacity thereof, leading to reduction of the first Coulombic efficiency of the SiOₓ negative electrode material. Thus, many researchers make improvements in a manner of supplementing lithium in advance with respect to this problem.

A negative electrode active material containing SiOₓ and Li₂Si₂O₅ improves the cycle performance and initial charge and discharge characteristics. Another Li-containing silicon oxide powder containing crystalline Li₂Si₂O₅ and Li₂Si₂O₃ improves the cycle performance of the material. Another negative electrode with a negative electrode material containing SiOₓ, Li₂Si₂O₅, and Li₂Si₂O₃ may obtain good cycle performance and initial charge and discharge characteristics.

However, in the crystallization process of the lithium silicate in the above negative electrode material, the growth of silicon crystalline grains also will be promoted, and the increase of the silicon crystalline grains will affect the cycle performance of the negative electrode material.

### Summary

With regard to the above problems existing in the prior art, the present disclosure aims at providing a negative electrode material, a preparation method therefor, and a lithium ion battery. For the negative electrode material provided in the present disclosure, by controlling the crystalline grain size of lithium silicate, the cycle performance of the material is improved while enabling the negative electrode material to obtain high first Coulombic efficiency.

In order to achieve this objective, the present disclosure adopts the following technical solution:
In a first aspect, the present disclosure provides a negative electrode material, wherein the negative electrode material includes nano-silicon, silicon oxide, and crystalline Li₂Si₂O₅, and wherein Li₂Si₂O₅ crystalline grains have an average grain size of less than 20 nm.

In the above solution, the size of the crystalline lithium silicate is within a suitable range, so as to improve the first Coulombic efficiency and the cycle performance of the material; on the other hand, the lithium silicate has good lithium ion conducting property, and combined with the smaller crystalline grain size thereof, it is better ensured that the lithium ions smoothly complete the lithium intercalation/deintercalation reaction, and exhibit good rate capability.

In a possible embodiment, the negative electrode material satisfies at least one of the following conditions a~f:
a. the chemical formula of the silicon oxide is SiOₓ, where 0<×≤1;
b. the silicon oxide and the Li₂Si₂O₅ have the nano-silicon dispersed therein;
c. the Li₂Si₂O₅ covers at least part of the nano-silicon and/or the silicon oxide;
d. the nano-silicon has a grain size of 0~15 nm, excluding 0 nm;
e. a mass fraction of the Li₂Si₂O₅ in the negative electrode material is 30wt%~70wt%; and
f. the negative electrode material has an average particle size of 1 µm~50 µm.

In a possible embodiment, the negative electrode material satisfies at least one of the following conditions a~c:
a. a surface of the negative electrode material is formed with a carbon coating layer;
b. a surface of the negative electrode material is formed with a carbon coating layer, and the carbon coating layer has a thickness of 10 nm∼2000 nm; and
c. a surface of the negative electrode material is formed with a carbon coating layer, and a mass fraction of the carbon coating layer in the negative electrode material is 1wt%~10wt%.

In a second aspect, the present disclosure provides a preparation method for a negative electrode material, including the following steps:
performing heat treatment on a silicon oxygen material under a protective atmosphere or vacuum to obtain a heat-treated silicon oxygen material; and
mixing the heat-treated silicon oxygen material with a lithium source under a protective atmosphere or vacuum, and then performing sintering to obtain the negative electrode material, wherein the negative electrode material includes nano-silicon, silicon oxide, and crystalline Li₂Si₂O₅.

In the above solution, by performing the heat treatment on the silicon oxygen material to a suitable degree, the silicon oxygen material is disproportionated, and a reaction rate of lithium doping reaction is controlled, thereby controlling the crystalline grain size of the lithium silicate generated, and greatly improving the first Coulombic efficiency of the material, so that the cycle performance of the negative electrode material is improved while the negative electrode material obtains high first Coulombic efficiency. In addition, the lithium silicate has good lithium ion conducting property, and combined with the smaller crystalline grain size thereof, it is better ensured that the lithium ions smoothly complete the lithium intercalation/deintercalation reaction, and exhibit good rate capability.

In a possible embodiment, the negative electrode material satisfies at least one of the following conditions a~f:
a. an average grain size of the Li₂Si₂O₅ is less than 20 nm;
b. the chemical formula of the silicon oxide is SiOₓ, where 0<×≤1;
c. the silicon oxide and the Li₂Si₂O₅ have the nano-silicon dispersed therein;
d. the nano-silicon has a grain size of 0 nm ∼15 nm, excluding 0 nm;
b. a mass fraction of the Li₂Si₂O₅ in the negative electrode material is 30wt%~70wt%; and
f. the negative electrode material has an average particle size of 1 µm~50 µm.

In a possible embodiment, the method satisfies at least one of the following conditions a~g:
a. the chemical formula of the silicon oxygen material is SiO_{y}, where 0<y<2;
b. the silicon oxygen material is silicon monoxide;
c. a surface of the silicon oxygen material is coated with a carbon coating layer;
d. a surface of the silicon oxygen material is coated with a carbon coating layer, and the carbon coating layer has a thickness of 10 nm~2000 nm;
e. the protective atmosphere includes at least one selected from the group consisting of nitrogen gas, helium gas, neon gas, argon gas, krypton gas, and xenon gas;
f. the temperature of the heat treatment is 600 °C~1000 °C; and
g. the time of the heat treatment is 4 h~10 h.

In a possible embodiment, the method satisfies at least one of the following conditions a~d:
a. the lithium source includes at least one selected from the group consisting of metal lithium, lithium carbonate, lithium hydroxide, and lithium acetate;
b. a molar ratio of the heat-treated silicon oxygen material to the lithium source is (1.5~7):1 (1.5:1 to 7:1);
c. the temperature of the sintering is 300 °C~900 °C; and
d. the time of the sintering is 2 h~8 h.

In a possible embodiment, the method further includes: after sintering, performing post-treatment on a sintered product, wherein the post-treatment includes at least one of water washing and acid pickling.

In a possible embodiment, the method further includes:
performing carbon coating on the silicon oxygen material, wherein the carbon coating includes at least one of gas-phase carbon coating and solid-phase carbon coating.

In a possible embodiment, the method satisfies at least one of the following conditions a~b:
a. the carbon coating includes gas-phase carbon coating, and conditions of the gas-phase carbon coating are as follows: raising a temperature of the silicon oxide to 600 °C~1000 °C under a protective atmosphere, introducing an organic carbon source gas, maintaining the temperature for 0.5 h~10 h, and then cooling the resultant, wherein the organic carbon source gas includes hydrocarbons, and the hydrocarbons include at least one selected from the group consisting of methane, ethylene, acetylene, and benzene; and
b. the carbon coating includes solid-phase carbon coating, and conditions of the solid phase carbon coating are as follows: fusing the silicon oxide with the carbon source for 0.5 h~2 h, carbonizing an obtained carbon mixture at 600 °C~1000 °C for 2 h~6 h, and cooling the same, wherein the carbon source includes at least one selected from the group consisting of polymer, saccharides, organic acid, and asphalt.

In a possible embodiment, the method includes the following steps:
performing heat treatment on silicon monoxide under a protective atmosphere or vacuum, wherein the heat treatment temperature is 700 °C~900 °C, and the heat treatment time is 4 h~10 h, to obtain the heat-treated silicon monoxide; and
mixing, under a protective atmosphere or vacuum, the heat-treated silicon monoxide with the lithium source in a molar ratio of (2.5~5):1 (2.5:1 to 5:1), performing sintering, wherein the temperature of the sintering is 500 °C~800 °C and the time of the sintering is 2 h~8 h, and performing water washing and/or acid pickling on a sintered product, to obtain a negative electrode material.

In a third aspect, the present disclosure provides a lithium ion battery, wherein the lithium ion battery contains the above negative electrode material or the negative electrode material prepared according to the above preparation method.

Compared with the prior art, the present disclosure has following beneficial effects.
(1) For the negative electrode material provided in the present disclosure, by performing lithium-doping on a silicon monoxide material, the first Coulombic efficiency of the material is greatly improved, and by controlling the crystalline grain size of the lithium silicate generated, the cycle performance of the material is improved while enabling the material to obtain the high first Coulombic efficiency. In addition, the lithium silicate has good lithium ion conducting property, and combined with the smaller crystalline grain size thereof, it is better ensured that the lithium ions smoothly complete the lithium intercalation/deintercalation reaction, and exhibit good rate capability.
(2) The preparation method provided in the present disclosure, by performing the disproportionation on the silicon oxygen material to a suitable degree, the reaction rate of the lithium doping reaction is controlled, thereby controlling the crystalline grain size of the lithium silicate generated, ensuring the performance of the product, and improving the cycle performance of the material while obtaining the high first Coulombic efficiency.

### Brief Description of Drawings

FIG. 1 is a process flowchart of a preparation method for a negative electrode material provided in an example of the present disclosure;
FIG. 2 is an SEM diagram of a negative electrode material prepared in Example 1 of the present disclosure; and
FIG. 3 is an SEM diagram of a negative electrode material prepared in Example 2 of the present disclosure.

### Detailed Description of Embodiments

In order to better illustrate the present disclosure, and facilitate understanding the technical solutions of the present disclosure, the present disclosure is further described in detail below. However, the following embodiments are merely simple examples of the present disclosure, and do not represent or limit the scope of protection of the right of the present disclosure, and the scope of protection of the present disclosure is determined by the claims.

The following are typical but non-limiting embodiments of the present disclosure:
In a first aspect, the present disclosure provides a negative electrode material, wherein the negative electrode material includes nano-silicon, silicon oxide, and crystalline Li₂Si₂O₅, and wherein Li₂Si₂O₅ crystalline grains have an average grain size of less than 20 nm.

The negative electrode material provided in the present disclosure contains a lithium silicate phase Li₂Si₂O₅. Since Li₂Si₂O₅ is insoluble in water, the problem of processing stability of the negative electrode material may be solved fundamentally, for example, gas production of slurry, low viscosity, tailing at coating, and pinholes, air holes, etc. appearing after an electrode sheet is dried. No additional surface treatment on the negative electrode material is needed, then problems such as reduction in capacity and reduction in first efficiency of the lithium battery due to surface treatment may be avoided.

The following are optional technical solutions of the present disclosure, but are not limitations to the technical solutions provided in the present disclosure, and through the following optional technical solutions, technical objectives and beneficial effects of the present disclosure may be better achieved and realized.

In the negative electrode material provided in the present disclosure, the average grain size of the Li₂Si₂O₅ crystalline grains is less than 20 nm, and specifically may be 19 nm, 18 nm, 17 nm, 16 nm, 15 nm, 14 nm, 13 nm, 12 nm, 11 nm, 10 nm, 9 nm, 8 nm, 6 nm, or 5 nm, etc. Beneficial effects: by controlling the average grain size within 20 nm, the negative electrode material exhibits good cycle performance and rate capability, and if the crystalline grains are too large, the cycle performance and rate capability of the negative electrode material will be deteriorated.

As an optional technical solution of the present disclosure, the chemical formula of the silicon oxide is SiOₓ, where 0<×≤1, SiOₓ specifically may be SiO_{0.1}, SiO_{0.2}, SiO_{0.3}, SiO_{0.4}, SiO_{0.5}, SiO_{0.6}, SiO_{0.7}, SiO_{0.3}, SiO_{0.9} or SiO etc. Preferably, SiOₓ is SiO. It should be noted that the composition of SiOₓ is complicated, and it may be understood as being formed by uniformly dispersing elemental silicon Si in SiO₂.

As an optional technical solution of the present disclosure, the negative electrode material has an average particle size of 1 µm~50 µm; more specifically, the average particle size may be 1 µm, 10 µm, 15 µm, 20 µm, 25 µm, 30 µm, 35 µm, 40 µm, or 50 µm etc., but is not merely limited to the recited numerical values, and other unrecited numerical values within the numerical range are equally applicable. Controlling the average particle size of the silicon composite negative electrode material within the above range is beneficial for improving the cycle performance of the negative electrode material.

As an optional technical solution of the present disclosure, the silicon oxide and the Li₂Si₂O₅ have the nano-silicon dispersed therein, more specifically, the silicon oxide and the Li₂Si₂O₅ have the nano-silicon uniformly dispersed therein; or the silicon oxide has the nano-silicon dispersed, and the Li₂Si₂O₅ covers at least part of the nano-silicon and/or the silicon oxide.

Optionally, the nano-silicon has an average grain size of 0 nm ∼15 nm, excluding 0 nm, for example, 1 nm, 3 nm, 5 nm, 8 nm, 10 nm, 12 nm, or 15 nm etc. Controlling the nano-silicon within the above range can be beneficial for improving the cycle performance and the rate capability of the negative electrode material.

Optionally, a mass fraction of the Li₂Si₂O₅ in the negative electrode material is 30wt%~70wt%, the mass fraction specifically may be 30wt%, 35wt%, 40wt%, 45wt%, 50wt%, 55wt%, 60wt%, 65wt%, or 70wt% etc., but is not merely limited to the recited numerical values, and other unrecited numerical values within the numerical range are equally applicable. Controlling the mass fraction of the Li₂Si₂O₅ within the above range can be beneficial for improving the capacity and the first Coulombic efficiency of the negative electrode material.

As an optional technical solution of the present disclosure, a surface of the negative electrode material is further formed with a carbon coating layer.

A mass fraction of the carbon coating layer in the negative electrode material is 1 wt%~10wt%, specifically may be 1wt%, 2wt%, 3wt%, 4wt%, 5wt%, 6wt%, 7wt%, 8wt%, 9wt%, or 10wt% etc., but is not merely limited to the recited numerical values, and other unrecited numerical values within the numerical range are equally applicable.

The carbon coating layer has a thickness of 10 nm∼2000 nm, more specifically, the thickness may be 10 nm, 50 nm, 100 nm, 300 nm, 500 nm, 800 nm, 1000 nm, 1500 nm, 1800 nm, or 2000 nm, but is not merely limited to the recited numerical values, and other unrecited numerical values within the numerical range are equally applicable. If the carbon coating layer is too thick, the lithium ion transmission efficiency is reduced, which is disadvantageous for the material to charge and discharge at a high rate, and reduces the comprehensive performance of the negative electrode material, and if the carbon coating layer is too thin, it is disadvantageous for increasing the electrical conducting property of the negative electrode material and has poor performance in suppressing the volume expansion of the material, resulting in poor long-term cycle performance.

In a second aspect, the present disclosure provides a preparation method for a negative electrode material, including the following steps:
S100, performing heat treatment on a silicon oxygen material under a protective atmosphere or vacuum to obtain a heat-treated silicon oxygen material; and
S200, mixing the heat-treated silicon oxygen material with a lithium source under a protective atmosphere or vacuum, and then performing sintering to obtain a negative electrode material, wherein the negative electrode material includes nano-silicon, silicon oxide, and crystalline Li₂Si₂O₅.

In the preparation method provided in the present disclosure, by performing the lithium doping on the silicon oxygen material, the first Coulombic efficiency of the negative electrode material is greatly improved, and by performing the disproportionation on the silicon oxygen material (for example, silicon monoxide) to a suitable degree, the reaction rate of the lithium doping reaction is controlled, thereby controlling the crystalline grain size of the lithium silicate generated, and finally improving the cycle performance of the negative electrode material while enabling the negative electrode material to obtain the high first Coulombic efficiency. Moreover, the Li₂Si₂O₅ has good lithium ion conducting property, and combined with the smaller crystalline grain size thereof, it is better ensured that the lithium ions smoothly complete the lithium intercalation/deintercalation reaction, and exhibit good rate capability.

The following introduces the preparation method provided in the present solution in detail:
S100, performing heat treatment on a silicon oxygen material under a protective atmosphere or vacuum to obtain a heat-treated silicon oxygen material.

As an optional technical solution of the present disclosure, the chemical formula of the silicon oxygen material is SiO_{y}, where 0<y<2, SiO_{y} specifically may be Si0_{0.1}, SiO_{0.2}, SiO_{0.5}, SiO_{0.7}, SiO, SiO_{1.2}, SiO_{1.4}, SiO_{1.6}, SiO_{1.8}, or SiO_{1.9} etc. It should be noted that the composition of SiO_{y} is complicated, and it may be understood as being formed by uniformly dispersing amorphous elemental silicon Si in SiO₂. At high temperatures, the SiO_{y} has quite unstable thermodynamic properties, and is prone to disproportionation to generate Si and SiO₂.

As an optional technical solution of the present disclosure, the silicon oxygen material has an average particle size of 1 µm~50 µm, and more specifically, the average particle size may be 1 µm, 10 µm, 15 µm, 20 µm, 25 µm, 30 µm, 35 µm, 40 µm, or 50 µm etc. Controlling the silicon oxygen material within the above range may improve the cycle performance and the rate capability of the negative electrode material.

As an optional technical solution of the present disclosure, the protective atmosphere includes at least one selected from the group consisting of nitrogen gas, helium gas, neon gas, argon gas, krypton gas, and xenon gas.

Optionally, the temperature of the heat treatment is 600 °C~1000 °C, and specifically may be 600 °C, 700 °C, 800 °C, 900 °C, or 1000°C etc., but is not merely limited to the recited numerical values, and other unrecited numerical values within the numerical range are equally applicable. Optionally, the temperature of the heat treatment is 700 °C~900 °C. It has been found through a plurality of experiments that if the temperature of the heat treatment is too high, the growth rate of the monocrystalline silicon is accelerated, and the particle size is also gradually increased. If the heat treatment temperature is too low, the disproportionation reaction rate is decreased, and the degree of disproportionation of the silicon oxygen material is affected.

Optionally, the time of the heat treatment is 4 h~10 h, and specifically may be 4 h, 5 h, 6 h, 7 h, 8 h, 9 h, or 10 h etc., but is not merely limited to the recited numerical values, and other unrecited numerical values within the numerical range are equally applicable. It has been found through a plurality of experiments that, within the above time range, as the heat treatment time increases, the number of nano-silicon is also gradually increased, but the particle size of the nano-silicon does not change too much, so that the silicon oxygen material is sufficiently disproportionated to generate a sufficient amount of nano-silicon, which is helpful for improving the electrochemical performance of the negative electrode material.

In the present embodiment, the silicon oxygen material may be sufficiently disproportionated by heat treatment, that is, the silicon oxygen material itself is enabled to undergo a redox reaction, and be disproportionated to generate nano-silicon, which is helpful for improving the electrochemical performance of the negative electrode material.

As an optional technical solution of the present disclosure, the silicon oxygen material is optionally silicon monoxide SiO.

As an optional technical solution of the present disclosure, before performing the heat treatment on the silicon oxygen material, the method further includes:
performing carbon coating on the silicon oxygen material, wherein the carbon coating includes at least one of gas-phase carbon coating and solid-phase carbon coating.

It may be understood that when performing the carbon coating on the silicon oxygen material, because the carbon layer is relatively loose, there are a large number of microchannels, and the subsequent lithium salt may pass through the microchannels of the carbon coating layer, penetrate through the carbon coating layer, and react on the surface of the silicon oxygen material, then the carbon coating layer of the obtained negative electrode material is still located at an outermost layer.

As an optional technical solution of the present disclosure, when the gas-phase carbon coating is adopted, the silicon oxygen material is heated to 600 °C~1000 °C under a protective atmosphere, followed by introducing an organic carbon source gas, maintaining the temperature for 0.5 h~10 h and then cooling.

In some embodiments, the organic carbon source gas includes hydrocarbons, wherein the hydrocarbons include at least one selected from the group consisting of methane, ethylene, acetylene, and benzene.

As an optional technical solution of the present disclosure, when the solid-phase carbon coating is adopted, after the silicon oxygen material is fused with the carbon source for 0.5 h~2 h, the obtained carbon mixture is carbonized for 2 h~6 h at 600 °C~1000 °C and cooled.

In some embodiments, the carbon source includes at least one selected from the group consisting of polymer, saccharides, organic acid, and asphalt.

S200, mixing the heat-treated silicon oxygen material with a lithium source under a protective atmosphere or vacuum, and performing sintering to obtain a negative electrode material.

As an optional technical solution of the present disclosure, the lithium source includes at least one selected from the group consisting of metal lithium, lithium carbonate, lithium hydroxide, and lithium acetate.

As an optional technical solution of the present disclosure, the molar ratio of the heat-treated silicon oxygen material to the lithium source is (1.5~7):1, and specifically may be 1.5:1, 2:1, 3:1, 4:1, 5:1, 6:1, or 7:1 etc., but is not merely limited to the recited numerical values, and other unrecited numerical values within the numerical range are equally applicable. It has been found through a plurality of experiments that when the molar ratio of the heat-treated silicon oxygen material to the lithium source is too high (namely, the silicon oxygen material is too much), the silicon oxygen material cannot be sufficiently converted into Li₂Si₂O₅, thereby affecting the processing performance of the negative electrode material, and resulting in lower first efficiency of the negative electrode material; when the molar ratio of the silicon oxygen material to the lithium source is too low (namely, the lithium source is too much), an ideal negative electrode material cannot be obtained. Optionally, the molar ratio of the heat-treated silicon oxygen material to the lithium source is (2.5~5):1.

In some embodiments, the mixing is carried out in a mixing apparatus.

As an optional technical solution of the present disclosure, the protective atmosphere includes at least one selected from the group consisting of nitrogen gas, helium gas, neon gas, argon gas, krypton gas, and xenon gas.

Optionally, the temperature of the sintering is 300 °C~900 °C, and specifically may be 300 °C, 400 °C, 500 °C, 600 °C, 700 °C, 800 °C, or 900 °C etc., but is not merely limited to the recited numerical values, and other unrecited numerical values within the numerical range are equally applicable. Optionally, the temperature of the sintering is 500 °C~800 °C. When the sintering temperature is too high, the reaction will be violent, and the silicon crystalline grains grow rapidly, which affects the cycle performance of the negative electrode material; and when the sintering temperature is too low, Li₂Si₂O₅ cannot be generated.

Optionally, the time of the sintering is 2 h~8 h, and specifically may be 2 h, 3 h, 4 h, 5 h, 6 h, 7 h, or 8 h etc., but is not merely limited to the recited numerical values, and other unrecited numerical values within the numerical range are equally applicable. It may be understood that sufficient sintering may enable the silicon oxide to sufficiently react with the lithium source to generate Li₂Si₂O₅.

In a possible technical solution of the present disclosure, the method further includes: performing post-treatment on a sintered product after sintering, wherein the post-treatment includes at least one of water washing and acid pickling. It may be understood that the sintered product may contain a watersoluble lithium-containing compound such as Li₂O, Li₄SiO₄, and Li₂Si₂O₃, while Li₂Si₂O₅ is insoluble in water, then the impurity phase of the sintered product may be removed by water washing; likewise, these impurity phases also may be removed by acid pickling, thereby improving the first efficiency and cycle stability of the negative electrode material. When acid pickling is adopted, the acid solution may be, for example, a hydrochloric acid, a nitric acid, or a sulfuric acid.

As a further optional technical solution of the preparation method of the present disclosure, the method includes the following steps:
performing heat treatment on silicon monoxide under a protective atmosphere or vacuum, to obtain the heat-treated silicon monoxide, wherein the heat treatment temperature is 700 °C~900 °C, and the heat treatment time is 4 h~10 h; and
mixing, under a protective atmosphere or vacuum, the heat-treated silicon monoxide with the lithium source in a molar ratio of (2.5~5):1 (2.5:1 to 5:1), performing sintering, wherein the temperature of the sintering is 500 °C~800 °C, the time of the sintering is 2 h~8 h, and performing water washing and/or acid pickling on a sintered product, to obtain a negative electrode material.

In a third aspect, the present disclosure provides a lithium ion battery, wherein the lithium ion battery contains the silicon oxygen composite negative electrode material in the first aspect above or the silicon oxygen composite negative electrode material prepared according to the preparation method in the second aspect above.

Below a plurality of examples of the present disclosure are further illustrated, wherein the embodiments of the present disclosure are not limited to the following specific examples. Within the scope of protection, changes may be made as appropriate.

### Example 1

A negative electrode material was prepared according to the following method in the present example:
(1) performing heat treatment on 500 g of silicon monoxide containing 3wt% carbon coating layer for 4 h at 700 °C under an argon atmosphere to obtain heat-treated silicon monoxide;
(2) mixing the heat-treated silicon monoxide and metal lithium in a molar ratio of 1.5:1 in a mixing apparatus under an argon atmosphere to obtain a silicon oxide containing lithium inside; and
(3) sintering the silicon oxide containing lithium inside under an argon atmosphere at 600 °C for 6 h, and performing acid pickling on a sintered product to obtain the negative electrode material.

The negative electrode material prepared in the present example includes nano-silicon, silicon oxide SiO_{0.2}, and crystalline Li₂Si₂O₅, the nano-silicon is uniformly dispersed in SiO_{0.2} and Li₂Si₂O₅, the average grain size of the nano-silicon is 6.1 nm, the average grain size of the Li₂Si₂O₅ crystalline grains is 18.3 nm, and the mass fraction of Li₂Si₂O₅ in the negative electrode material is 67wt%. A surface of the negative electrode material is formed with a carbon coating layer.

See Table 1 for size test results and performance characterization results of the Li₂Si₂O₅ crystalline grains of the negative electrode material prepared in the present example.

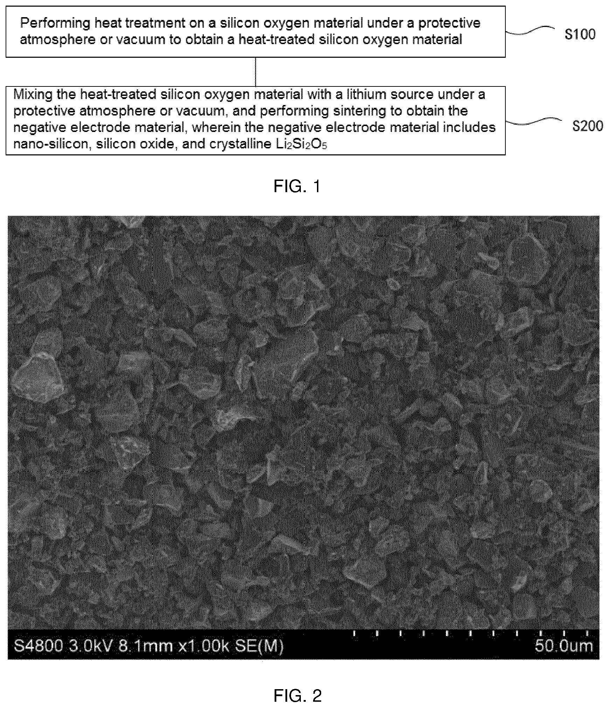

FIG. 2 is an SEM diagram of the negative electrode material prepared in the present example.

### Example 2

A negative electrode material was prepared according to the following method in the present example:
(1) performing heat treatment on 500 g of silicon monoxide containing 3wt% carbon coating layer for 4 h at 800 °C under an argon atmosphere to obtain heat-treated silicon monoxide;
(2) mixing the heat-treated silicon monoxide and metal lithium in a molar ratio of 1.5:1 in a mixing apparatus under an argon atmosphere to obtain a silicon oxide containing lithium inside; and
(3) sintering the silicon oxide containing lithium inside under an argon atmosphere at 600 °C for 6 h, and performing acid pickling on a sintered product to obtain the negative electrode material.

The negative electrode material prepared in the present example includes nano-silicon, silicon oxide SiO_{0.3}, and crystalline Li₂Si₂O₅, the nano-silicon is uniformly dispersed in SiO_{0.3} and Li₂Si₂O₅, the average grain size of the nano-silicon is 7.5 nm, the average grain size of the Li₂Si₂O₅ crystalline grains is 10.4 nm, and the mass fraction of Li₂Si₂O₅ in the negative electrode material is 56wt%. A surface of the negative electrode material is formed with a carbon coating layer.

See Table 1 for size test results and performance characterization results of the Li₂Si₂O₅ crystalline grains of the negative electrode material prepared in the present example.

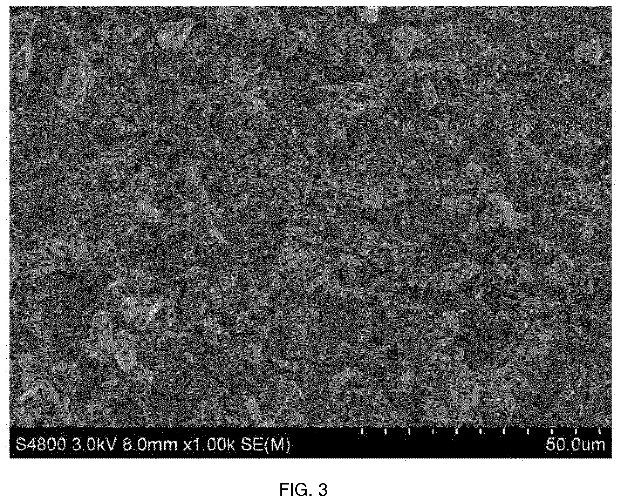

FIG. 3 is an SEM diagram of the negative electrode material prepared in the present example.

### Example 3

A negative electrode material was prepared according to the following method in the present example:
(1) performing heat treatment on 300 g of silicon monoxide containing 10wt% carbon coating layer for 10 h at 900 °C under a nitrogen atmosphere to obtain heat-treated silicon monoxide;
(2) mixing the heat-treated silicon monoxide and lithium carbonate in a molar ratio of 4:1 in a mixing apparatus under a nitrogen atmosphere to obtain a silicon oxide containing lithium inside; and
(3) sintering the silicon oxide containing lithium inside under a nitrogen atmosphere at 800 °C for 8 h, and performing acid pickling on a sintered product to obtain the negative electrode material.

The negative electrode material prepared in the present example includes nano-silicon, silicon oxide SiO_{0.7}, and crystalline Li₂Si₂O₅, the nano-silicon is uniformly dispersed in SiO_{0.7} and Li₂Si₂O₅, the average grain size of the nano-silicon is 3.9 nm, the average grain size of the Li₂Si₂O₅ crystalline grains is 11.6 nm, and the mass fraction of Li₂Si₂O₅ in the negative electrode material is 37wt%. A surface of the negative electrode material is formed with a carbon coating layer.

See Table 1 for size test results and performance characterization results of the Li₂Si₂O₅ crystalline grains of the negative electrode material prepared in the present example.

### Example 4

A negative electrode material was prepared according to the following method in the present example:
(1) performing heat treatment on 800 g of silicon monoxide containing 2wt% carbon coating layer for 4 h at 800 °C under a nitrogen atmosphere to obtain heat-treated silicon monoxide;
(2) mixing the heat-treated silicon monoxide and lithium acetate in a molar ratio of 7:1 in a mixing apparatus under a nitrogen atmosphere to obtain a silicon oxide containing lithium inside; and
(3) sintering the silicon oxide containing lithium inside under a nitrogen atmosphere at 500 °C for 8 h, and performing acid pickling on a sintered product to obtain the negative electrode material.

The negative electrode material prepared in the present example includes nano-silicon, silicon oxide SiO_{0.3}, and crystalline Li₂Si₂O₅, the nano-silicon is uniformly dispersed in SiO_{0.3} and Li₂Si₂O₅, the average grain size of the nano-silicon is 2.2 nm, the average grain size of the Li₂Si₂O₅ crystalline grains is 10.7 nm, and the mass fraction of Li₂Si₂O₅ in the negative electrode material is 33wt%. A surface of the negative electrode material is formed with a carbon coating layer.

See Table 1 for size test results and performance characterization results of the Li₂Si₂O₅ crystalline grains of the negative electrode material prepared in the present example.

### Example 5

A negative electrode material was prepared according to the following method in the present example:
(1) performing heat treatment on 500 g of silicon monoxide containing 3wt% carbon coating layer for 4 h at 600 °C under an argon atmosphere to obtain heat-treated silicon monoxide;
(2) mixing the heat-treated silicon monoxide and metal lithium in a molar ratio of 1.5:1 in a mixing apparatus under an argon atmosphere to obtain a silicon oxide containing lithium inside; and
(3) sintering the silicon oxide containing lithium inside under an argon atmosphere at 300 °C for 6 h, and performing acid pickling on a sintered product to obtain the negative electrode material.

The negative electrode material prepared in the present example includes nano-silicon, silicon oxide SiO_{0.9}, and crystalline Li₂Si₂O₅, the nano-silicon is uniformly dispersed in SiO_{0.9} and Li₂Si₂O₅, the average grain size of the nano-silicon is 4.6 nm, the average grain size of the Li₂Si₂O₅ crystalline grains is 6.8 nm, and the mass fraction of Li₂Si₂O₅ in the negative electrode material is 30wt%. A surface of the negative electrode material is formed with a carbon coating layer.

See Table 1 for size test results and performance characterization results of the Li₂Si₂O₅ crystalline grains of the negative electrode material prepared in the present example.

### Example 6

A negative electrode material was prepared according to the following method in the present example:
(1) performing heat treatment on 500 g of SiO_{1.5} containing 3wt% carbon coating layer for 4 h at 1000 °C under an argon atmosphere to obtain heat-treated SiO_{1.5};
(2) mixing the heat-treated silicon monoxide and metal lithium in a molar ratio of 1.5:1 in a mixing apparatus under an argon atmosphere to obtain a silicon oxide containing lithium inside; and
(3) sintering the silicon oxide containing lithium inside under an argon atmosphere at 900 °C for 6 h, and performing acid pickling on a sintered product to obtain a negative electrode material.

The negative electrode material prepared in the present example includes nano-silicon, silicon oxide SiO₀.₃, and crystalline Li₂Si₂O₅, the nano-silicon is uniformly dispersed in SiO₀.₃ and Li₂Si₂O₅, the average grain size of the nano-silicon is 12.3 nm, the average grain size of the Li₂Si₂O₅ crystalline grains is 12.2 nm, and the mass fraction of Li₂Si₂O₅ in the negative electrode material is 61wt%. A surface of the negative electrode material is formed with a carbon coating layer.

See Table 1 for size test results and performance characterization results of the Li₂Si₂O₅ crystalline grains of the negative electrode material prepared in the present example.

### Example 7

In the present example, except that the temperature of the heat treatment is 570 °C in step (1), the other operation conditions and the materials are the same as those in Example 1.

The negative electrode material prepared in the present example includes nano-silicon, silicon oxide SiO_{0.4}, and crystalline Li₂Si₂O₅, the nano-silicon is uniformly dispersed in SiO_{0.4} and Li₂Si₂O₅, the average grain size of the nano-silicon is 8.7 nm, the average grain size of the Li₂Si₂O₅ crystalline grains is 26.5 nm, and the mass fraction of Li₂Si₂O₅ in the negative electrode material is 58wt%. A surface of the negative electrode material is formed with a carbon coating layer.

See Table 1 for size test results and performance characterization results of the Li₂Si₂O₅ crystalline grains of the negative electrode material prepared in the present example.

### Example 8

In the present example, except that the temperature of the heat treatment is 1025 °C in step (1), the other operation conditions and the materials are the same as those in Example 1.

The negative electrode material prepared in the present example includes nano-silicon, silicon oxide SiO₀.₃, and crystalline Li₂Si₂O₅, the nano-silicon is uniformly dispersed in SiO₀.₃ and Li₂Si₂O₅, the average grain size of the nano-silicon is 5.4 nm, the average grain size of the Li₂Si₂O₅ crystalline grains is 17.6 nm, and the mass fraction of Li₂Si₂O₅ in the negative electrode material is 45wt%. A surface of the negative electrode material is further coated with a carbon layer.

See Table 1 for size test results and performance characterization results of the Li₂Si₂O₅ crystalline grains of the negative electrode material prepared in the present example.

### Comparative Example 1

A negative electrode material was prepared according to the following method in the present example:
(1) performing heat treatment on 500 g of silicon monoxide containing 3wt% carbon coating layer for 4 h at 700 °C under an argon atmosphere to obtain heat-treated silicon monoxide.

The negative electrode material prepared in the present example includes the heat-treated silicon monoxide, and does not contain nano-silicon or Li₂Si₂O₅.

### Comparative Example 2

A negative electrode material was prepared according to the following method in the present example:
(1) mixing 500 g of silicon monoxide containing 3wt% carbon coating layer and metal lithium in a molar ratio of 1.5:1 in a mixing apparatus under an argon atmosphere to obtain a silicon oxide containing lithium inside; and
(2) sintering the silicon oxide containing lithium inside under an argon atmosphere at 600 °C for 6 h, and performing acid pickling on a sintered product to obtain the negative electrode material.

The negative electrode material prepared in the present example includes nano-silicon, silicon oxide SiO_{0.2}, and crystalline Li₂Si₂O₅, the nano-silicon is uniformly dispersed in SiO_{0.2} and Li₂Si₂O₅, the average grain size of the nano-silicon is 6.1 nm, the average grain size of the Li₂Si₂O₅ crystalline grains is 27.4 nm, and the mass fraction of Li₂Si₂O₅ in the negative electrode material is 67wt%. A surface of the negative electrode material is formed with a carbon coating layer.

See Table 1 for size test results and performance characterization results of the Li₂Si₂O₅ crystalline grains of the negative electrode material prepared in the present comparative example.

### Test Method

Method for measuring and calculating the crystalline grain size of Li₂Si₂O₅:
Powder of the negative electrode material prepared in each of the examples and the comparative examples was subjected to X-ray diffraction measurement using CuKα rays, wherein an analytical diffraction angle 2θ shown in a range of 24.4 °~25.0 ° belonged to (111) peak of Li₂Si₂O₅, and the crystalline grain value of Li₂Si₂O₅ was calculated by Scherrer formula.

Electrochemical Performance Test:
(1) Test of first efficiency: a. preparation of a lithium ion battery: the prepared negative electrode material, conductive carbon black, CMC, and SBR were coated onto a copper foil in a ratio of 75:15:5:5, to prepare a negative electrode sheet, a metal lithium sheet acted as a counter electrode, a PP/PE film acted as a diaphragm, electrolyte was 1 mol/L mixture of LiPF₆, dimethyl carbonate, and ethyl methyl carbonate (volume ratio 1:1:1), and a button battery was prepared; b. the electrochemical performance of the battery was tested using a LAND or NEWARE 5 V/10 mA type battery tester, wherein the voltage is 1.5 V, the current is 0.1 C, the first efficiency=first charging specific capacity/first discharging specific capacity.
(2) Test of cycle performance: a. preparation of a lithium ion battery: the prepared negative electrode material was mixed with graphite in a ratio of 15:85 to obtain an active material; the active material, conductive carbon black, CMC, and SBR were coated onto a copper foil in a ratio of 92:4:2:2, to prepare a negative electrode sheet, a metal lithium sheet acted as a counter electrode, a PP/PE film acted as a diaphragm, and electrolyte was 1 mol/L mixture of LiPF₆, dimethyl carbonate, and ethyl methyl carbonate (volume ratio 1:1:1), and a button battery was prepared; b. the electrochemical performance of the battery was tested using a LAND or NEWARE 5 V/10 mA type battery tester, wherein the voltage is 1.5 V, the current is 0.1 C, 50-cycle capacity retention ratio=50^{th} charging specific capacity/first charging specific capacity.
(3) Test of rate capability: a. preparation of a lithium ion battery: the prepared negative electrode material was mixed with graphite in a ratio of 15:85 to obtain an active material; the active material, conductive carbon black, CMC, and SBR were coated onto a copper foil in a ratio of 92:4:2:2, to prepare a negative electrode sheet, a metal lithium sheet acted as a counter electrode, a PP film acted as a diaphragm, electrolyte was 1 mol/L mixture of LiPF₆, dimethyl carbonate, and ethyl methyl carbonate (volume ratio 1:1:1), and a button battery was prepared; b. the electrochemical performance of the battery was tested using a LAND or NEWARE 5 V/10 mA type battery tester, wherein the voltage is 1.5 V, the current is 0.1 C and 3 C respectively, 3 C/0.1 C=discharging specific capacity of 3 C current/discharging specific capacity of 0.1 C current.

See the following table for test results:

**Table 1**

| | Li₂Si₂O₅ crystalline grain (nm) | First discharging specific capacity (mAh/g) | First efficiency (%) | 50-cycle retention ratio (%) | 3 C/0.1 C capacity retention rate (%) |
|---|---|---|---|---|---|
| Example 1 | 18.3 | 1453.9 | 89.0 | 87.3 | 85.3 |
| Example 2 | 10.4 | 1481.5 | 88.6 | 89.6 | 88.2 |
| Example 3 | 11.6 | 1400.8 | 86.5 | 88.0 | 85.1 |
| Example 4 | 10.7 | 1451.3 | 86.1 | 88.4 | 85.6 |
| Example 5 | 6.8 | 1466.7 | 84.6 | 87.2 | 86.3 |
| Example 6 | 12.2 | 1406.5 | 85.5 | 88.6 | 87.9 |
| Example 7 | 26.5 | 1411.3 | 87.2 | 65.5 | 63.2 |
| Example 8 | 17.6 | 1318.7 | 83.3 | 76.0 | 75.3 |
| Comparative Example 1 | / | 1566.7 | 73.4 | 83.5 | 81.5 |
| Comparative Example 2 | 27.4 | 1405.4 | 87.7 | 63.2 | 61.4 |

The heat treatment temperature of Example 7 is too low, resulting in too large crystalline grains of Li₂Si₂O₅, so that the cycle retention ratio and capacity retention ratio thereof are both poor.

The heat treatment temperature of Example 8 is too high, resulting in an inappropriate degree of disproportionation of the silicon oxygen material, and relatively low capacity and first efficiency of the material.

The lithium doping is not performed on the silicon monoxide material in Comparative Example 1, which results in relatively low first efficiency of the material.

In Comparative Example 2, lithium doping is directly performed without performing heat treatment on the silicon monoxide material, which results in too large Li₂Si₂O₅ crystalline grains generated, so that the first Coulombic efficiency, cycle performance, and rate capability thereof are significantly poor.

To sum up, it may be seen from the above examples and comparative examples that for the negative electrode material in Examples 1-6, by performing the lithium doping on the silicon monoxide material, the first Coulombic efficiency of the material is greatly improved, and by controlling the crystalline grain size of the Li₂Si₂O₅ generated, the average grain size of the crystalline grains is less than 20 nm, and finally the cycle performance of the material is improved while enabling the material to obtain the high first Coulombic efficiency. In addition, the Li₂Si₂O₅ has good lithium ion conducting property, and combined with the smaller crystalline grain size thereof, it is better ensured that the lithium ions smoothly complete the lithium intercalation/deintercalation reaction, and exhibit good rate capability.

The applicant states that the detailed process equipment and process flow of the present disclosure are illustrated through the above examples in the present disclosure, but the present disclosure is not limited to the above detailed process equipment and process flow, that is, it does not mean that the present disclosure must be implemented relying upon the detailed process equipment and process flow above. Those skilled in the art should know that any improvement on the present disclosure, equivalent substitutions of raw materials and addition of auxiliary components of products of the present disclosure, selection of specific modes, etc., are included in the scope of protection and the scope of disclosure of the present disclosure.

## Claims

1. A negative electrode material, wherein the negative electrode material comprises nano-silicon, silicon oxide, and crystalline Li₂Si₂O₅, and wherein Li₂Si₂O₅ crystalline grains have an average grain size of less than 20 nm.

2. The negative electrode material according to claim 1, satisfying at least one of following conditions a~f:
a. a chemical formula of the silicon oxide is SiOₓ, where 0<×≤1;
b. the silicon oxide and the Li₂Si₂O₅ have the nano-silicon dispersed therein;
c. the Li₂Si₂O₅ covers at least part of the nano-silicon and/or the silicon oxide;
d. the nano-silicon has a grain size of 0~15 nm, excluding 0 nm;
e. a mass fraction of the Li₂Si₂O₅ in the negative electrode material is 30wt%~70wt%; and
f. the negative electrode material has an average particle size of 1 µm~50 µm.

3. The negative electrode material according to any one of claims 1~2, satisfying at least one of following conditions a~c:
a. a carbon coating layer is formed on a surface of the negative electrode material;
b. a carbon coating layer is formed on a surface of the negative electrode material, and the carbon coating layer has a thickness of 10 nm∼2000 nm; and
c. a carbon coating layer is formed on a surface of the negative electrode material, and a mass fraction of the carbon coating layer in the negative electrode material is 1wt%~10wt%.

4. A preparation method for a negative electrode material, comprising following steps:
performing heat treatment on a silicon oxygen material under a protective atmosphere or vacuum to obtain a heat-treated silicon oxygen material; and
mixing the heat-treated silicon oxygen material with a lithium source under a protective atmosphere or vacuum, and then performing sintering to obtain the negative electrode material, wherein the negative electrode material comprises nano-silicon, silicon oxide, and crystalline Li₂Si₂O₅.

5. The preparation method according to claim 4, satisfying at least one of following conditions a~g:
a. an average grain size of the Li₂Si₂O₅ is less than 20 nm;
b. a chemical formula of the silicon oxide is SiOₓ, where 0<×≤1;
c. the silicon oxide and the Li₂Si₂O₅ have the nano-silicon dispersed therein;
d. the Li₂Si₂O₅ covers at least part of the nano-silicon and/or the silicon oxide;
e. the nano-silicon has a grain size of 0~15 nm, excluding 0 nm;
f. a mass fraction of the Li₂Si₂O₅ in the negative electrode material is 30wt%~70wt%; and
g. the negative electrode material has an average particle size of 1 µm~50 µm.

6. The preparation method according to claim 4 or 5, satisfying at least one of following conditions a~g:
a. a chemical formula of the silicon oxygen material is SiO_{y}, where 0<y<2;
b. the silicon oxygen material is silicon monoxide;
c. a surface of the silicon oxygen material is coated with a carbon coating layer;
d. a surface of the silicon oxygen material is coated with a carbon coating layer, and the carbon coating layer has a thickness of 10 nm~2000 nm;
e. the protective atmosphere comprises at least one selected from the group consisting of nitrogen gas, helium gas, neon gas, argon gas, krypton gas, and xenon gas;
f. a temperature of the heat treatment is 600 °C~1000 °C; and
g. time of the heat treatment is 4 h~10 h.

7. The preparation method according to any one of claims 4-6, satisfying at least one of following conditions a~d:
a. the lithium source comprises at least one selected from the group consisting of metal lithium, lithium carbonate, lithium hydroxide, and lithium acetate;
b. a molar ratio of the heat-treated silicon oxygen material to the lithium source is (1.5~7):1;
c. a temperature of the sintering is 300 °C~900 °C; and
d. time of the sintering is 2 h~8 h.

8. The preparation method according to any one of claims 4-7, wherein the method further comprises: performing a post-treatment on a sintered product after the sintering, wherein the post-treatment comprises at least one of water washing and acid pickling.

9. The preparation method according to any one of claims 4-8, wherein the method further comprises:
performing carbon coating on the silicon oxygen material, wherein a manner of the carbon coating comprises at least one of gas-phase carbon coating and solid-phase carbon coating.

10. The preparation method according to claim 9, satisfying at least one of following conditions a~b:
a. the carbon coating comprises gas-phase carbon coating, and conditions of the gas-phase carbon coating comprises: raising a temperature of the silicon oxide to 600 °C~1000 °C under a protective atmosphere, introducing an organic carbon source gas, maintaining the temperature for 0.5 h~10 h, and then cooling, wherein the organic carbon source gas comprises hydrocarbons, and the hydrocarbons comprise at least one selected from the group consisting of methane, ethylene, acetylene, and benzene; and
b. the carbon coating comprises solid-phase carbon coating, and conditions of the solid phase carbon coating comprises: fusing the silicon oxide with the carbon source for 0.5 h~2 h, carbonizing an obtained carbon mixture at 600 °C~1000 °C for 2 h~6 h, and cooling, wherein the carbon source comprises at least one selected from the group consisting of polymer, saccharides, organic acid, and asphalt.

11. The preparation method according to any one of claims 4-10, comprising following steps:
performing a heat treatment on silicon monoxide under a protective atmosphere or vacuum to obtain the heat-treated silicon monoxide, wherein a temperature of the heat treatment is 700 °C~900 °C, and time of the heat treatment is 4 h~10 h; and
mixing, under a protective atmosphere or vacuum, the heat-treated silicon monoxide with the lithium source in a molar ratio of (2.5~5):1, performing sintering and performing water washing and/or acid pickling on a sintered product to obtain the negative electrode material, wherein a temperature of the sintering is 500 °C~800 °C, time of the sintering is 2 h~8h.

12. A lithium ion battery, wherein the lithium ion battery contains the negative electrode material according to any one of claims 1~3 or the negative electrode material prepared according to the preparation method according to any one of claims 4~11.
